# DEMANDE DE BREVET EUROPEEN

(11) **EP 2 567 781 A1**
(43) Date de publication de la demande: **13.03.2013**
(21) Numéro de dépôt: 11180349.0
(22) Date de dépôt: 07.09.2011
(51) Int. Cl.: B23Q 11/08

(54) **Capotage de machines-outils**

(71) Demandeur: Tornos SA, 2740 Moutier (CH)
(72) Inventeur: Vettori, Marco, 2732 Loveresse (CH); Beuret, Joseph, 2053 Cernier (CH)
(74) Mandataire: BOVARD AG

(57) **Abrégé**

La présente invention concerne une machine-outil (101) automatique pour usiner une pièce dans une zone de travail. La machine-outil (101) comprend un châssis (203) ; au moins une broche (206) au moins partiellement dans le châssis (203) pour tenir la pièce à usiner ; au moins un élément fonctionnel (207) lié à l'usinage de la pièce, l'élément fonctionnel (207) se situant essentiellement devant la broche (206) du côté de la machine-outil (101) où l'usinage de la pièce est susceptible d'être effectué ; et une protection ouvrable (209) permettant l'accès de l'opérateur à la zone de travail, la protection ouvrable (209) en position fermée avec le châssis (203) et un ou plusieurs plans verticaux au niveau de l'extrémité de la broche (206) où l'usinage est susceptible d'être effectué définissant la zone de travail. La protection ouvrable (209) est agencée pour s'ouvrir de telle manière qu'au moins une partie qui se trouve directement au-dessous de la zone de travail est accessible à l'opérateur jusqu'à la surface où la machine-outil est placée pour faciliter l'accès à la zone de travail.

## Description

### DOMAINE DE L'INVENTION

L'invention se rapporte à une machine-outil automatique permettant facilement à l'utilisateur d'accéder à la zone d'usinage. Cet effet est obtenu par une machine-outil comprenant un élément de protection qui peut s'ouvrir comme expliqué plus en détail plus loin.

### DESCRIPTION DE L'ART ANTERIEUR

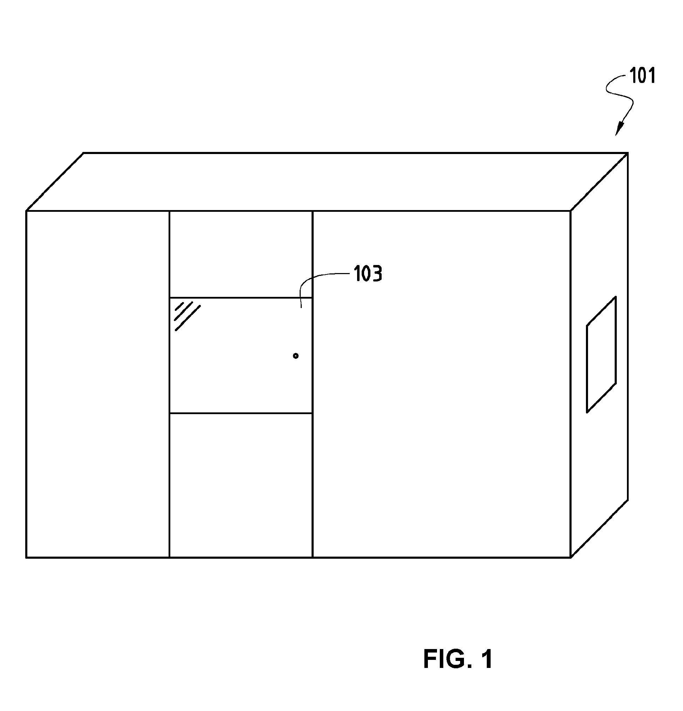

Les machines-outils automatiques, telles que les décolleteuses, agencées pour usiner une pièce, généralement sous forme d'une barre ou de lopins, nécessitent normalement une protection pour protéger l'utilisateur contre des copaux et du liquide de coupe utilisé lors de l'usinage. Cette protection comporte normalement un accès sous forme d'une porte ou fenêtre qui peut s'ouvrir pour que l'utilisateur puisse accéder aux outils, par exemple, après avoir terminé les opérations d'usinage. Par exemple, dans les décolleteuses connues, cette porte ou fenêtre se trouve essentiellement parallèlement à la barre à usiner. Donc, cette configuration donne à un utilisateur de la machine-outil un accès à la barre et aux outils depuis le côté latéral de la machine-outil. Cette solution est schématiquement illustrée sur la figure 1 où on peut voir une machine-outil 101, telle qu'une décolleteuse avec une fenêtre latérale 103.

Le problème qui se pose surtout dans des machines-outils relativement petites, telles que les décolleteuses, est que l'accès à la zone de travail ou d'usinage, et par conséquent aux outils, reste assez limité même si on réussit à ouvrir complètement la porte ou la fenêtre. Cet accès limité est dû au fait que l'utilisateur de la machine-outil doit rester assez éloigné de la véritable zone de travail en raison du design actuel des machines-outils connues. Ceci signifie aussi que l'ergonomie de ces machines n'est pas idéale.

### RESUME DE L'INVENTION

L'objet de la présente invention est de surmonter les problèmes des solutions connues. La présente invention propose donc une machine-outil qui permet aisément d'accéder à la zone d'usinage comme expliqué plus en détail plus loin.

A cet effet, l'invention a pour objet une machine-outil automatique pour usiner une pièce dans une zone de travail, la machine-outil comprenant :
● un châssis ;
● au moins une broche au moins partiellement dans le châssis pour tenir la pièce à usiner ;
● au moins un élément fonctionnel lié à l'usinage de la pièce, l'élément fonctionnel se situant essentiellement devant la broche du côté de la machine-outil où l'usinage de la pièce est susceptible d'être effectué ; et
● une protection ouvrable permettant l'accès de l'opérateur à la zone de travail, la protection ouvrable en position fermée avec le châssis et au moins un plan vertical au niveau de l'extrémité de la broche où l'usinage est susceptible d'être effectué définissant la zone de travail,
dans laquelle la protection ouvrable est agencée pour s'ouvrir de telle manière qu'au moins une partie qui se trouve directement au-dessous de la zone de travail est accessible à l'opérateur jusqu'à la surface où la machine-outil est placée pour faciliter l'accès à la zone de travail.

La présente invention propose donc une conception ergonomique de protection de machines-outils (capotage) permettant d'augmenter l'accessibilité à la zone de travail de la machine. La solution proposée augmente donc l'accessibilité aux outils par l'opérateur et par conséquent augmente la visibilité globale de la zone de travail. En plus selon la machine-outil proposée, il n'est pas nécessaire pour l'opérateur de monter sur une partie de la machine pour accéder à la zone de travail. La solution proposée diminue aussi des risques de blessures par une posture améliorée de l'opérateur.

Selon un aspect de la présente invention la machine outil n'a pas de porte-à-faux de cadre de châssis au moins au-dessus de la zone de travail. Cet aspect a en plus l'avantage que l'opérateur peut travailler sur les outils sans craindre d'avoir du liquide de coupe qui tombe sur lui.

Les autres aspects de la présente invention se trouvent dans les revendications dépendantes.

### BREVE DESCRIPTION DES DESSINS

L'invention sera bien comprise à la lecture de la description ci-après faite à titre d'exemple non limitatif en regardant les dessins ci-annexés qui représentent schématiquement :
- figure 1 : en perspective, une vue schématique d'une machine-outil selon une solution connue,
- figure 2 : en perspective, une machine-outil avec la protection en position ouverte selon un premier mode de réalisation de la présente invention,
- figure 3 : en perspective, la machine-outil de la figure 2 avec la protection en position fermée,
- figure 4 : vue de dessus, la machine-outil de la figure 2 avec la protection en position semi-ouverte,
- figure 5 : en perspective, une machine-outil avec la protection en position ouverte selon un deuxième mode de réalisation de la présente invention,
- figure 6 : en perspective, une machine-outil de la figure 5 avec la protection en position ouverte, vue d'un autre angle que la figure 5,
- figure 7 : en perspective, la machine-outil de la figure 5 avec la protection en position fermée,
- figure 8 : en perspective, la machine-outil de la figure 5 illustrant un collecteur de gouttes rétractable selon un aspect de la présente invention,
- figure 9 : en perspective, une machine-outil avec la protection en position fermée selon un troisième mode de réalisation de la présente invention, et
- figure 10 : en perspective, une machine-outil de la figure 9 avec la protection en position ouverte.

### DESCRIPTION DETAILLEE DES MODES DE REALISATION

En se reportant aux dessins, quelques modes de réalisation non limitatifs d'une machine-outil ou d'un tour automatique conformément à la présente invention sont maintenant expliqués plus en détail. Par une machine-outil automatique on comprend une machine-outil qui est agencée pour usiner une pièce ou des pièces selon un programme prédéterminé. Donc il n'est pas nécessaire pour l'opérateur de faire des manipulations manuelles des outils entre l'usinage de chaque pièce.

La présente invention consiste à proposer une solution de capotage pour une machine-outil pour faciliter à l'opérateur l'accès à la zone de travail. Le capotage proposé permet de dégager la partie basse de la machine usuellement présente sur les machines-outils, afin de permettre à l'opérateur de s'approcher plus aisément des systèmes d'outils.

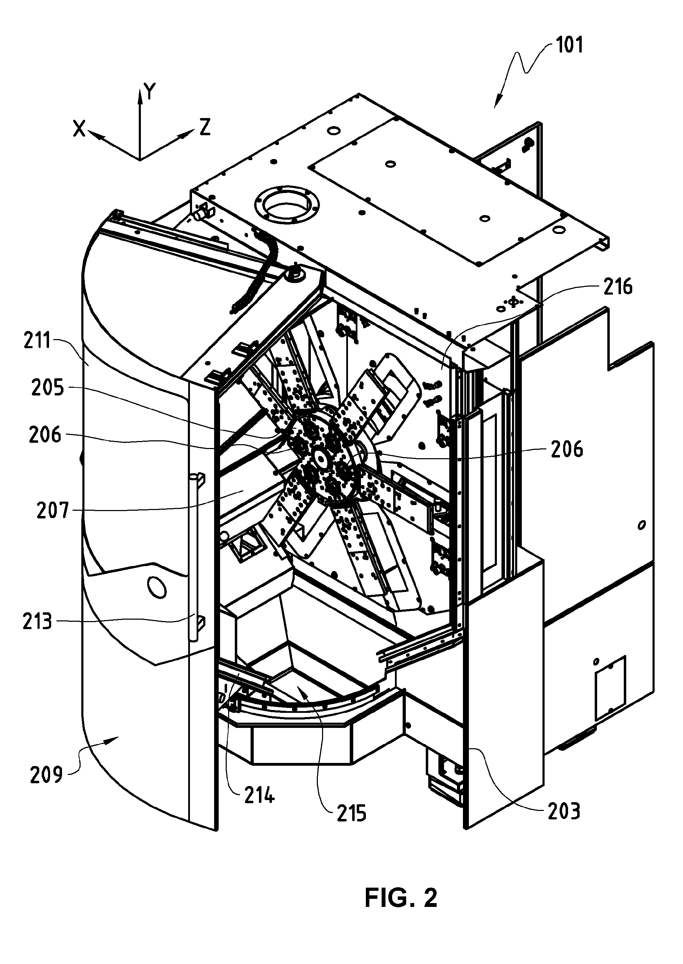

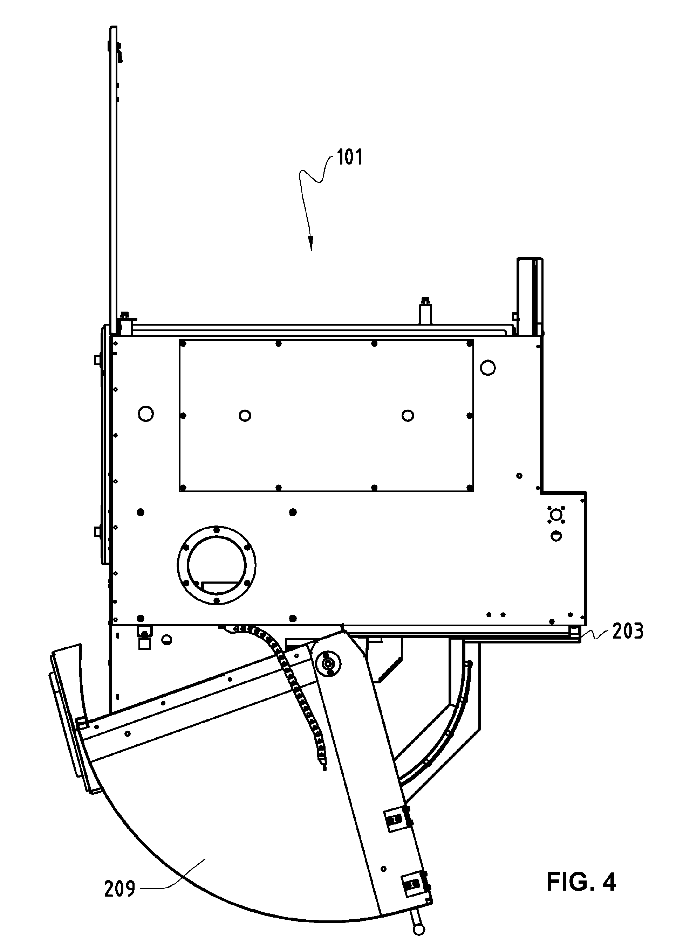

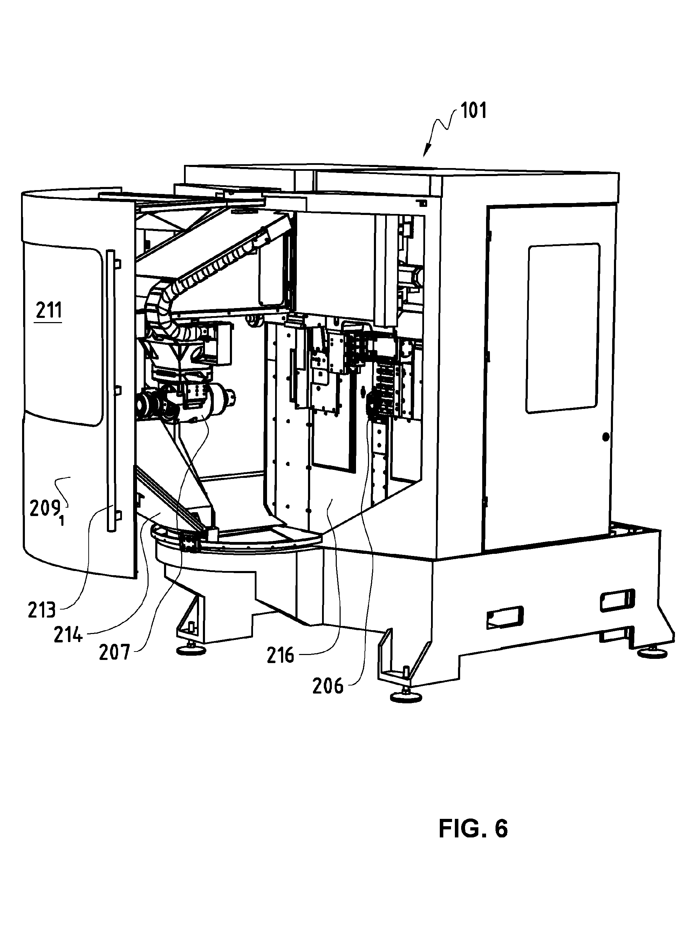

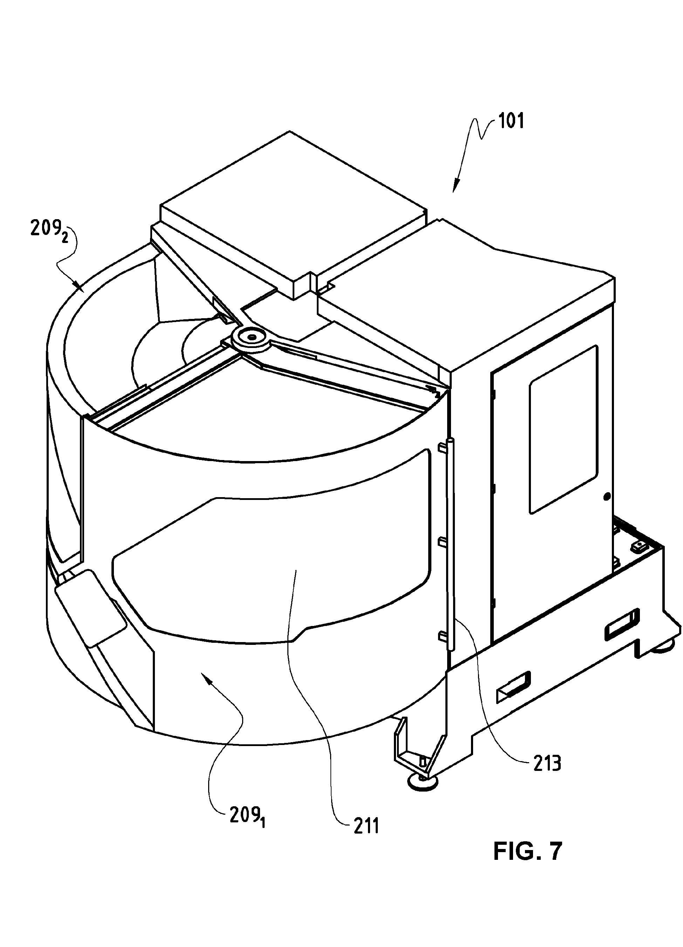

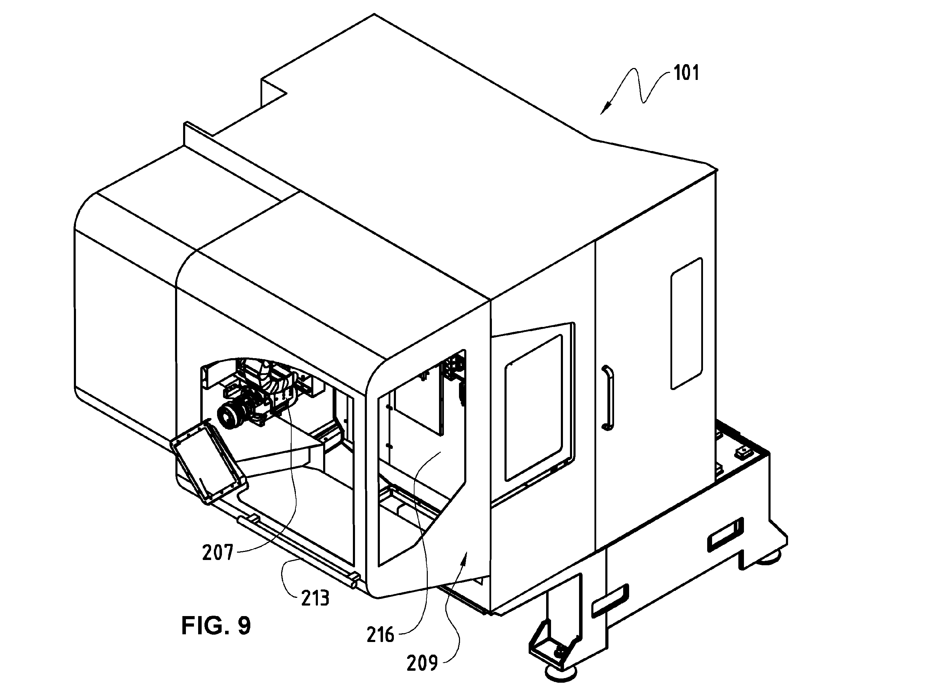

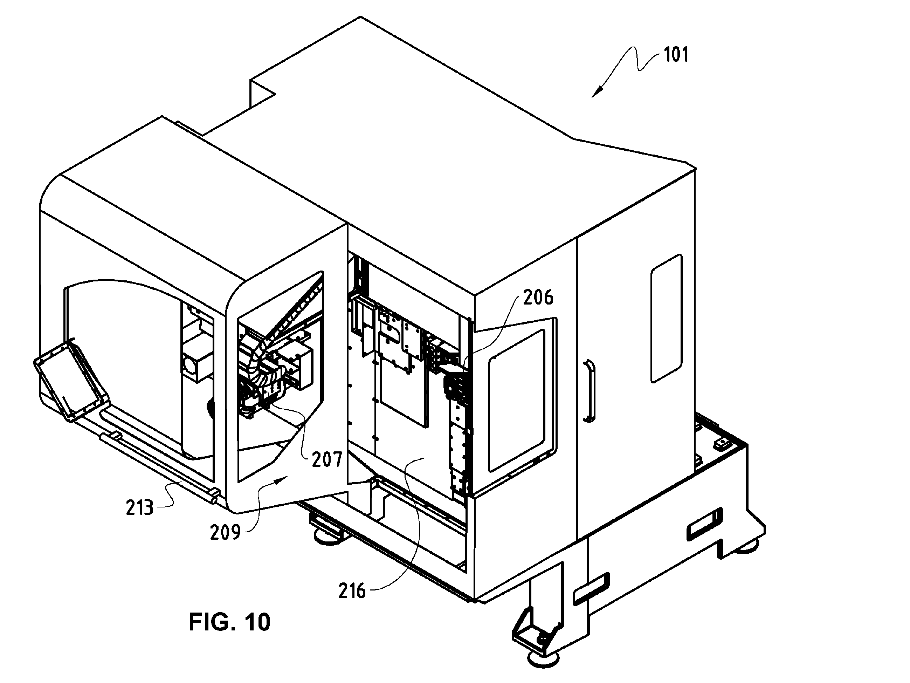

Le capotage peut être de forme sensiblement arrondie comme vu sur les figures 2 à 8 ou carré comme vu sur les figures 9 et 10. La partie basse à dégager étant solidaire de la porte d'accès. La solution proposée ici permet de donner un accès à la zone de travail par la suppression des parties limitant l'accès à la zone de travail lors de l'ouverture des portes.

Sur la figure 2 on voit en vue perspective la machine-outil 101 selon un premier mode de réalisation de la présente invention. Certains éléments ne sont pas illustrés, tel que le ravitailleur, qui se trouve typiquement derrière (côté opposé de la machine-outil par rapport au côté où se trouve les outils) la machine-outil. La plupart des éléments de la machine-outil 101 se trouvent à l'intérieur d'un châssis ou cadre 203. La machine-outil selon ce mode de réalisation comprend un barillet 205 contenant plusieurs broches 206 pour tenir la pièce à usiner. Par conséquent, on peut parler d'une solution multibroche. L'extrémité exposée de la pièce peut donc être usinée en tenant la pièce par ces broches 206.

Devant le barillet 205 on voit un élément fonctionnel 207, qui dans cet exemple est une contre-broche. Cette contre-broche est agencée pour tenir la pièce pour que les outils puissent usiner l'autre extrémité de la pièce. Dans cet exemple la contre-broche se déplace uniquement essentiellement en Z (axe longitudinal de la machine qui correspond sensiblement à l'axe longitudinal de la barre à usiner). On pourrait bien sûr imaginer une solution où la contre-broche est agencée pour se déplacer sur un plan XZ (horizontal) et/ou YZ (vertical).

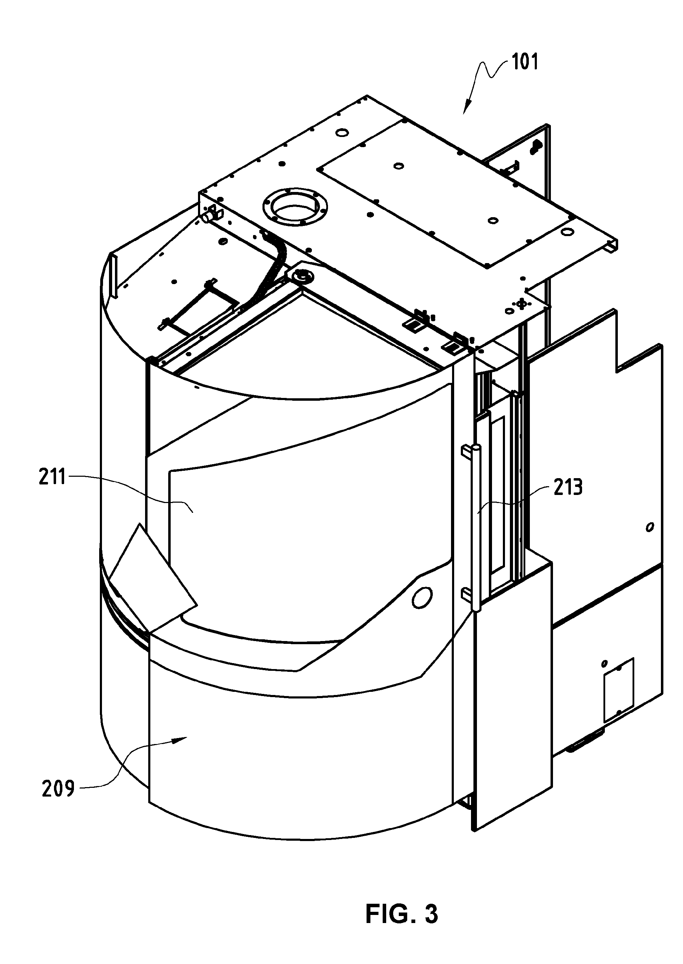

Sur cette figure on voit également une protection ouvrable 209 qui est dans cet exemple une porte pivotante. La porte 209 comprend une paroi verticale sensiblement arrondie et une partie horizontale qui fait partie du toit de la machine 101 lorsque la porte 209 est fermée. Par une surface horizontale on comprend une surface sensiblement parallèle à la surface (plate) sur laquelle la machine est placée alors que par une surface verticale on comprend une surface sensiblement perpendiculaire à la surface (plate) sur laquelle la machine est placée. Sur cette figure la porte est dans la position ouverte alors que sur la figure 3 on voit la porte dans la position fermée. Dans la position fermée la porte protège efficacement la partie extérieure de la machine-outil contre des gouttes de l'huile ou contre des copeaux qui se produisent lors de l'usinage. La porte 209 comprend aussi une fenêtre 211 à travers laquelle l'opérateur peut suivre l'usinage. Selon un aspect, on peut ouvrir cette fenêtre sans ouvrir la porte 209 ou la fenêtre peut être fixe sans donner à l'opérateur la possibilité d'ouvrir cette fenêtre. La porte 209 comprend aussi une poignée 213 pour faciliter l'ouverture de la porte 209. Intégré à la porte 209 il y a aussi un collecteur 214 qui dirige les gouttes de l'huile ou de l'autre liquide et les copeaux vers un réservoir 215 d'où le liquide collecté peut être réutilisé pour l'usinage.

Comme on peut le voir sur les figures, la porte 209 se trouve à une extrémité de la machine-outil, qui est donc l'extrémité où l'usinage est agencé pour être effectué. La direction d'ouverture de cette extrémité est donc sensiblement perpendiculaire à la barre à usiner ou bien perpendiculaire à la direction de ravitaillement de la matière à usiner. De cette manière l'opérateur peut donc facilement faire des manipulations essentiellement devant les broches. Cet aspect de la présente invention est avantageux car, par exemple, dans les décolleteuses connues, l'opérateur a la possibilité de faire des manipulations depuis le côté latéral (parallèle à la barre à usiner) de la machine-outil et cet accès à la zone de travail est très limité. Dans l'exemple illustré, la porte 209 est de forme arrondie (vue de dessus), et la moitié de l'extrémité de la machine-outil 101 peut être dégagée lors de l'ouverture de la porte 209. Dans cet exemple, l'autre moitié de cette extrémité, qui est aussi une protection, est fixe, et peut faire partie du châssis 203.

La porte 209 en position fermée, avec le châssis 203 et la paroi derrière les outils 216 définissent un espace à l'intérieure de la machine 101 qui est la zone de travail ou bien la zone d'usinage. Au lieu d'utiliser la paroi 216 dans cette définition, on pourrait également définir un plan ou plusieurs plans (vertical/verticaux) au niveau de l'extrémité des broches où l'on effectue l'usinage. Selon la présente invention, l'opérateur a donc un accès plus facile à cette zone que dans les solutions connues. L'opérateur peut en effet occuper la zone qui se trouve au-dessous de la zone de travail pour approcher des outils et des broches. Autrement dit, au moins une partie qui se trouve directement au-dessous (lorsque la machine est placée sur une surface en état de fonction normale) de la zone de travail est accessible à l'opérateur jusqu'à la surface où la machine-outil est placée pour faciliter l'accès à la zone de travail. De cette manière l'opérateur peut être debout sur le sol directement au-dessous de la zone de travail. Par rapport aux solutions connues, la présente solution augmente l'ergonomie considérablement. Donc par rapport aux solutions existantes, il n'est plus nécessaire pour l'opérateur de se pencher en avant depuis une ouverture au côté latéral de la machine-outil, mais l'opérateur a maintenant la possibilité d'accéder à la zone de travail depuis l'extrémité de la machine-outil 101 où on effectue l'usinage sans devoir se pencher et sans monter sur au moins une partie de la machine-outil.

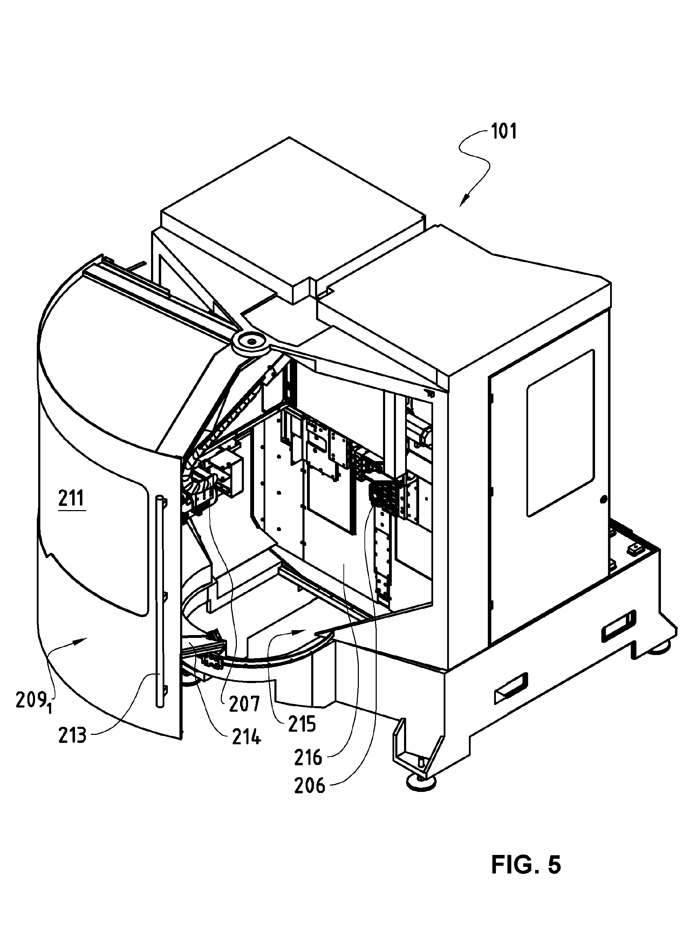

Les figures 5-7 illustrent le deuxième mode de réalisation de la présente invention selon lequel la machine-outil 101 est de type monobroche. Dans cette solution aussi, l'élément fonctionnel 207 qui se trouve essentiellement devant la broche 206 est une contre-broche 207. Toutefois, selon cet exemple la contre-broche 207 est agencée pour se déplacer horizontalement (sur un plan XZ) pour dégager la zone de travail lorsqu'on ouvre la porte 209 pour que l'opérateur puisse accéder à la zone de travail. Dans cet exemple la contre-broche peut donc aussi se déplacer horizontalement et sensiblement perpendiculairement à l'axe longitudinal de la machine. Dans ce mode de réalisation la machine-outil 101 comprend deux protections ouvrables : dans cet exemple une première porte pivotante 209₁ et une deuxième porte pivotante 209₂. Selon ce mode de réalisation l'opérateur peut donc accéder selon ses besoins à la zone de travail depuis n'importe quel côté (gauche ou droite) de l'extrémité de la machine-outil.

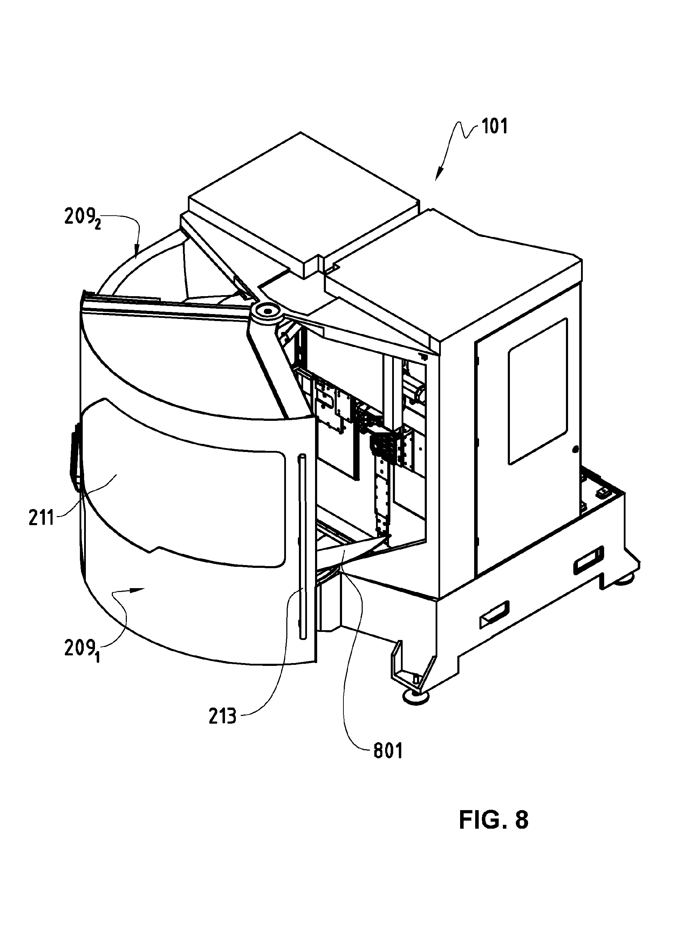

En fonction de quel côté l'opérateur veut accéder à la zone de travail, la contre-broche se déplace soit vers la gauche soit vers la droite. Par exemple, sur la figure 8, c'est la porte de l'extrémité droite 209₁ (vue depuis l'avant de la machine) qui s'ouvre, par conséquent l'opérateur peut déplacer la contre-broche vers la gauche pour mieux accéder à la zone de travail. Bien sûr on pourrait combiner avec le déplacement horizontal aussi un déplacement vertical ou bien selon certaines solutions, la contre-broche pourrait se déplacer uniquement verticalement, ou bien être fixe. On pourrait aussi imaginer une solution où la contre-broche 207 se déplace automatiquement lorsque l'on ouvre une des portes 209₁, 209₂. Dans ce cas, il est possible que plus on ouvre la porte, plus la contre-broche 207 se déplace. On pourrait aussi imaginer une solution dans laquelle la contre-broche 207 est intégrée à la porte 209.

La figure 8 montre un autre aspect de la présente invention. Cet aspect concerne le collecteur des gouttes rétractable 801. Ce collecteur de gouttes est rétractable de manière que si l'on ouvre la porte 209 seulement un peu, le collecteur de gouttes 801 reste étendu, tel qu'illustré sur la figure 8. Si on ouvre la porte davantage, le collecteur de gouttes 801 se rétracte pour que l'opérateur puisse mieux accéder à la zone de travail. On peut donc définir un seuil d'ouverture pour la porte 209. Si la porte dépasse ce seuil d'ouverture, le collecteur de gouttes 801 se rétracte. Le collecteur de gouttes 801 peut être intégré à la porte. Cet aspect de la présente invention a l'avantage que l'opérateur peut ouvrir légèrement la porte 209 sans craindre que l'huile ou autre liquide ne tombe parterre. Toutefois, si l'opérateur souhaite accéder à la zone de travail, il ouvre davantage la porte et le collecteur de gouttes 801 se rétracte pour se trouver derrière la porte 209.

Les figures 9 et 10 illustrent le troisième mode de réalisation de la présente invention. Selon ce mode de réalisation la machine-outil 101, au lieu de comprendre une ou deux portes pivotantes, la machine-outil 101 comprend au moins une porte (armoire) coulissante 209, telle qu'illustrée sur les figures 9 et 10. La machine-outil 101 selon ce mode de réalisation peut être soit une machine monobroche soit une machine multibroche et l'élément fonctionnel 207 est soit fixe soit non-fixe. Dans cet exemple la contre-broche 207 est agencée pour se déplacer horizontalement au moins partiellement dans l'armoire coulissante 209.

On pourrait aussi envisager plusieurs variations dans la configuration expliquée ci-dessus sans sortir du cadre de la présente invention. Par exemple, l'élément fonctionnel 207 peut aussi être un porte-outil fixe ou tournant.

## Revendications

1. Une machine-outil (101) automatique pour usiner une pièce dans une zone de travail, la machine-outil (101) comprenant :
● un châssis (203) ;
● au moins une broche (206) au moins partiellement dans le châssis (203) pour tenir la pièce à usiner ;
● au moins un élément fonctionnel (207) lié à l'usinage de la pièce, l'élément fonctionnel (207) se situant essentiellement devant la broche (206) du côté de la machine-outil (101) où l'usinage de la pièce est susceptible d'être effectué ; et
● une protection ouvrable (209) permettant l'accès de l'opérateur à la zone de travail, la protection ouvrable (209) en position fermée avec le châssis (203) et au moins un plan vertical au niveau de l'extrémité de la broche (206) où l'usinage est susceptible d'être effectué définissant la zone de travail,
dans laquelle la protection ouvrable (209) est agencée pour s'ouvrir de telle manière qu'au moins une partie qui se trouve directement au-dessous de la zone de travail est accessible à l'opérateur jusqu'à la surface où la machine-outil est placée pour faciliter l'accès à la zone de travail.

2. La machine-outil (101) selon la revendication 1, dans laquelle la protection ouvrable (209) se trouve à l'extrémité de la machine-outil (101) où l'usinage est susceptible d'être effectué.

3. La machine-outil (101) selon l'une quelconque des revendications précédentes, dans laquelle la protection (209) est ouvrable de manière à donner un accès frontal à la zone de travail.

4. La machine-outil (101) selon l'une quelconque des revendications précédentes, dans laquelle l'élément fonctionnel (207) est susceptible de se déplacer horizontalement et sensiblement perpendiculairement à l'axe longitudinal de la machine-outil.

5. La machine-outil (101) selon la revendication 4, dans lequel l'élément fonctionnel (207) est agencé pour se déplacer avec la protection ouvrable (209).

6. La machine-outil (101) selon l'une quelconque des revendications précédentes, dans laquelle l'élément fonctionnel (207) est une contre-broche (207).

7. La machine-outil (101) selon l'une quelconque des revendications 1 à 5, dans laquelle l'élément fonctionnel (207) est un porte-outil fixe ou tournant (207).

8. La machine-outil (101) selon l'une quelconque des revendications précédentes, dans laquelle la protection ouvrable (209) est un élément pivotant.

9. La machine-outil (101) selon l'une quelconque des revendications 1 à 7, dans laquelle la protection ouvrable (209) est un élément coulissant.

10. La machine-outil (101) selon l'une quelconque des revendications précédentes, comprenant en plus un collecteur de gouttes rétractable (801).

11. La machine-outil (101) selon la revendication 10, dans laquelle le collecteur de gouttes (801) est intégré à la protection ouvrable (209) de telle manière que le collecteur de gouttes (801) est agencé pour rester dans un état étendu jusqu'à une position ouverte prédéterminée de la protection ouvrable (209) et est agencé pour se rétracter dès que la protection ouvrable (209) est ouverte au-delà du niveau prédéterminé de l'ouverture de la protection ouvrable (209).

12. La machine-outil (101) selon l'une quelconque des revendications précédentes, dans laquelle la protection ouvrable (209) consiste en deux portes (209₁, 209₂).

13. La machine-outil (101) selon l'une quelconque des revendications précédentes, dans laquelle la machine-outil (101) est une décolleteuse monobroche.

14. La machine-outil (101) selon l'une quelconque des revendications 1 à 12, dans laquelle la machine-outil (101) est une décolleteuse multibroche.

15. La machine-outil (101) selon l'une quelconque des revendications précédentes, dans laquelle la protection ouvrable (209) comprend au moins une protection verticale et une protection sensiblement horizontale.
